# EUROPEAN PATENT APPLICATION

(11) **EP 2 166 530 A2**
(43) Date of publication of application: **24.03.2010**
(21) Application number: 09008028.4
(22) Date of filing: 19.06.2009
(51) Int. Cl.: G09G 3/20

(54) **Liquid crystal display and display system comprising the same**

(30) Priority: 19.09.2008 KR 20080092259
(71) Applicant: Samsung Electronics Co., Ltd., Gyeonggi-Do 442-742 (KR)
(72) Inventor: Kim, Yong-Bum, Yongin-si Gyeonggi-do (KR); Lee, Sang-Keun, Seoul (KR)
(74) Representative: Weitzel, Wolfgang

(57) **Abstract**

A liquid crystal display (200) and a display system (10) including the same are provided in one or more embodiments. For example, a liquid crystal display may include for an embodiment a bi-directional channel (320), a memory (220) in which driving signal generation data including information required to generate a plurality of driving signals and EDID (Extended Display Identification Data) are stored, and a timing controller (210) which receives the driving signal generation data and the EDID from the memory and transmits the EDID to the outside through the bi-directional channel. The driving signal generation data and the EDID may be transmitted from the memory to the timing controller via a single interface (270). A first time period during which the driving signal generation data is transmitted may not overlap with a second time period during which the EDID is transmitted.

## Description

### CROSS-REFERENCE TO RELATED APPLICATION

This application claims priority from Korean Patent Application No. 10-2008-0092259 filed on September 19, 2008 in the Korean Intellectual Property Office, the disclosure of which is incorporated herein by reference in its entirety.

### BACKGROUND

### 1. Technical Field

The present disclosure relates generally to a liquid crystal display and a display system comprising the same.

### 2. Related Art

A liquid crystal display typically includes a liquid crystal panel having a first substrate with a pixel electrode, a second substrate with a common electrode, and a dielectric, anisotropic liquid crystal layer interposed between the first substrate and the second substrate. An electric field is generated between the pixel electrode and the common electrode, and the intensity of the electric field is adjusted to control an amount of light transmitted through the liquid crystal, thereby displaying desired images on the liquid crystal panel. Since the liquid crystal display is not self-luminescent, a light source such as a backlight unit is provided in the rear of the liquid crystal panel.

In order to drive the liquid crystal display, the liquid crystal panel, driving integrated circuits ("ICs"), which transmit signals required to display an image, the backlight unit, an inverter, a power supply module, which provides a power supply voltage required to drive the liquid crystal display, and an external transmission cable, which transmits an image signal, must be electrically connected to one another.

To electrically connect the functional blocks, an LVDS (Low Voltage Differential Signaling) interface has widely been used as an internal interface, and a VGA (Video Graphics Array), a DVI (Digital Video/visual Interactive) and the like, have been widely used as an external interface.

In the conventional connection standards, such as LVDS/DVI, EDID (Extended Display Identification Data), information is stored in a scaler board. The EDID information includes information about horizontal and vertical frequencies, a maker identifier, a model identifier of the display device, serial numbers, and so on.

### SUMMARY

The present disclosure provides a liquid crystal display having reduced wirings in accordance with one or more embodiments.

The present disclosure also provides a display system having reduced wirings in accordance with one or more embodiments.

The above embodiments and other aspects of the present disclosure will be described in or be apparent from the following description of embodiments.

In an embodiment, a liquid crystal display may include a bi-directional channel, a memory in which driving signal generation data including information required to generate a plurality of driving signals and EDID (Extended Display Identification Data) are stored, and a timing controller. The timing controller may receive the driving signal generation data and the EDID from the memory and transmit the EDID to the outside through the bi-directional channel. The driving signal generation data and the EDID may be transmitted from the memory to the timing controller via a single interface. A first time period during which the driving signal generation data is transmitted may not overlap with a second time period during which the EDID is transmitted.

In an embodiment, a display system may include a bi-directional channel, a memory in which driving signal generation data for generating a plurality of control signals and EDID (Extended Display Identification Data) may be stored, a liquid crystal display including a timing controller which receives the driving signal generation data and the EDID from the memory and transmits the EDID to the outside through the bi-directional channel, and a host device receiving the EDID from the liquid crystal display. The driving signal generation data and the EDID may be transmitted from the memory to the timing controller via a single interface. A first time period during which the driving signal generation data is transmitted may not overlap with a second time period during which the EDID is transmitted.

### BRIEF DESCRIPTION OF THE DRAWINGS

The above and other features and advantages of the present disclosure will become more apparent by describing exemplary embodiments thereof with reference to the attached drawings in which:

FIG. 1 is a block diagram showing an example liquid crystal display and a display system including the same in accordance with an embodiment;

FIG. 2 is a conceptual diagram illustrating the example liquid crystal display and display system including the same shown in FIG. 1 in accordance with an embodiment;

FIG. 3 is a cross-sectional view of a transmission cable shown in FIG. 2 in accordance with an embodiment;

FIG. 4 is a block diagram showing a memory and a timing controller shown in FIG. 2 in accordance with an embodiment;

FIG. 5 is a timing diagram illustrating operation of memories of first and second communication modules shown in FIG. 4 in accordance with an embodiment;

FIG. 6 is a block diagram showing an exemplary liquid crystal display and a display system including the same in accordance with an embodiment; and

FIG. 7 is a timing diagram illustrating operation of memories of first and second communication modules shown in FIG. 6 in accordance with an embodiment.

### DETAILED DESCRIPTION

Advantages and features of the present disclosure and systems and methods of accomplishing the same may be understood more readily by reference to the following detailed description of one or more embodiments and the accompanying drawings. Embodiments of the present disclosure may, however, be embodied in many different forms and should not be construed as being limited to the example embodiments set forth herein. Rather, these embodiments are provided so that this disclosure will be thorough and complete and will fully convey the concept of the disclosure to those skilled in the art, and the present invention will only be defined by the appended claims. Like reference numerals refer to like elements throughout the specification. In the drawings, the thicknesses of layers and regions are exaggerated for clarity.

It will be understood that when an element or layer is referred to as being "on," "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numbers refer to like elements throughout. As used herein, the term "and/or" includes any and all combinations of one or more of the associated listed items.

It will be understood that, although the terms first, second, third etc. may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the present disclosure.

The terminology used herein is for the purpose of describing particular embodiments only and is not intended to be limiting of the disclosure. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

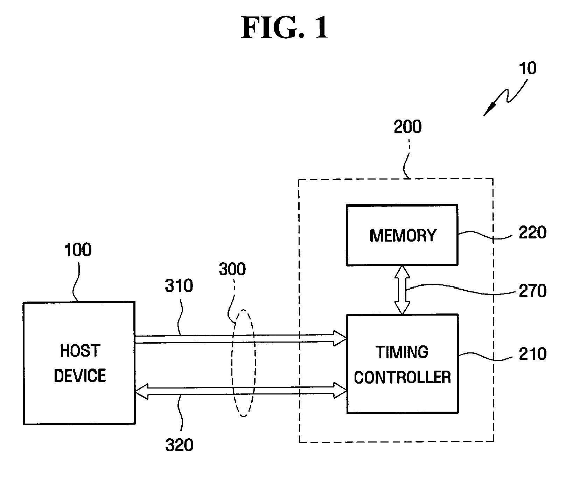

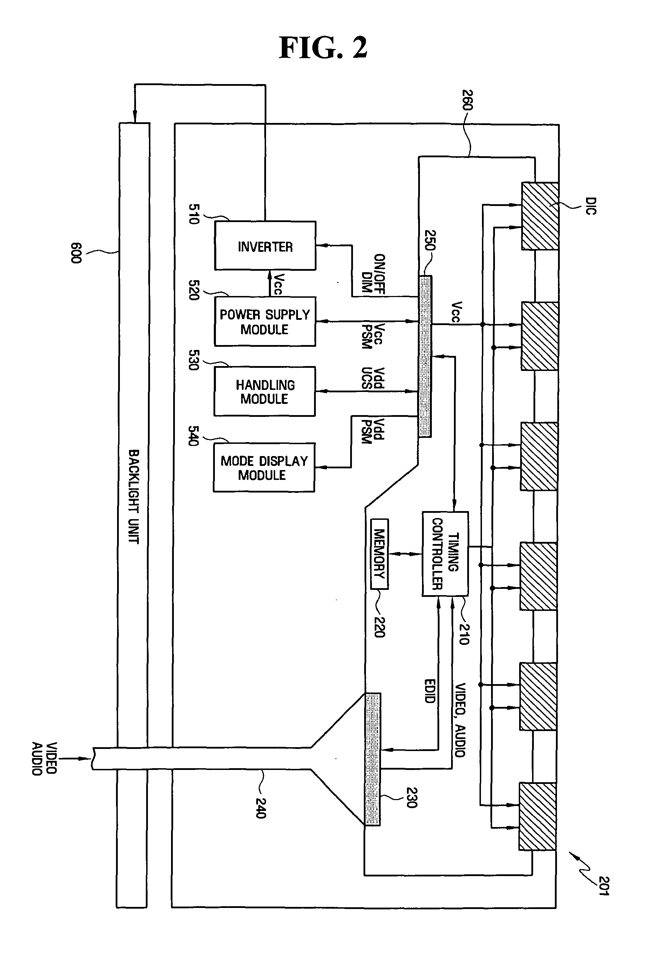

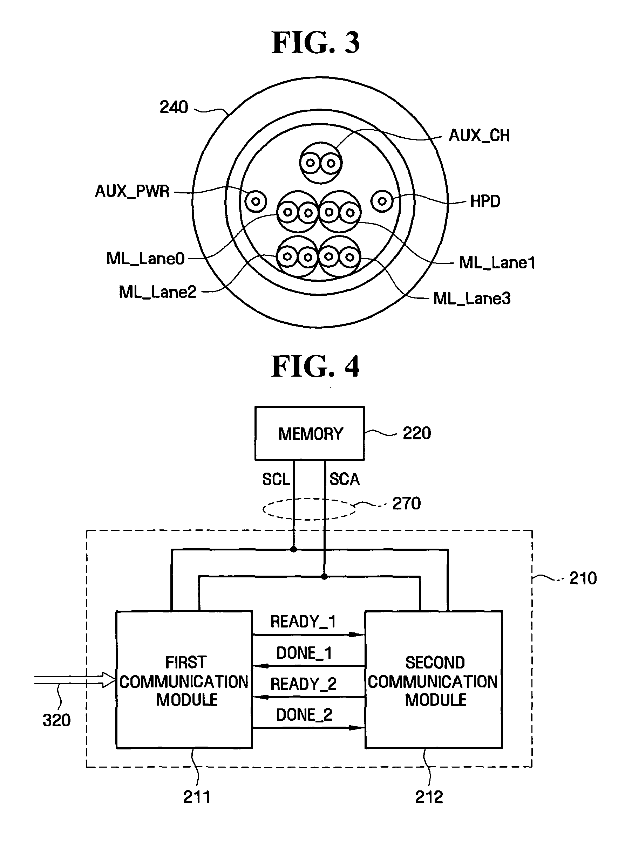

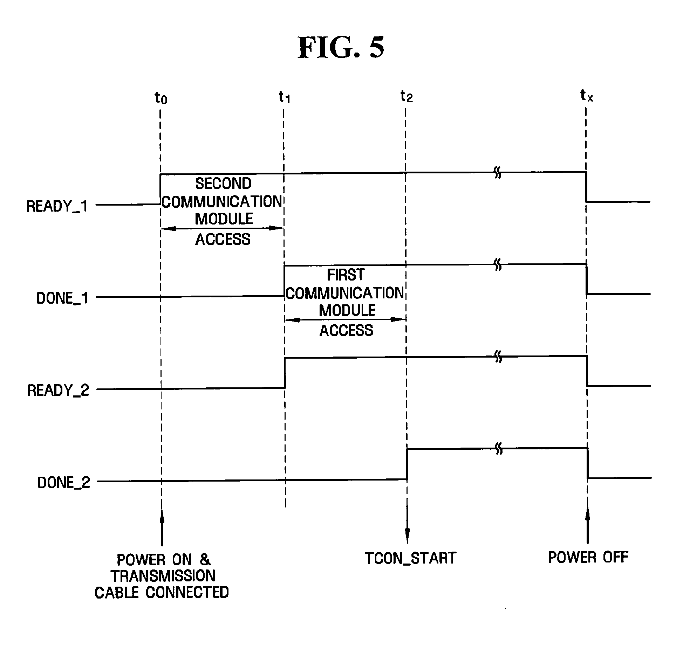

Hereinafter, one or more embodiments of a liquid crystal display and a display system including the same will be described in detail with reference to FIGS. 1 through 5. FIG. 1 is a block diagram showing an exemplary liquid crystal display and a display system including the same, FIG. 2 is a conceptual diagram for explaining the liquid crystal display and the display system including the same shown in FIG. 1, FIG. 3 is a cross-sectional view of a transmission cable shown in FIG. 2, FIG. 4 is a block diagram showing a memory and a timing controller shown in FIG. 2, and FIG. 5 is a timing diagram for explaining memories of first and second communication modules shown in FIG. 4.

In an exemplary embodiment, the display system 10 may include a liquid crystal display 200 and a host device 100.

The liquid crystal display 200 may include a bi-directional channel 320, a memory 220 in which driving signal generation data including information required to generate a plurality of driving signals and EDID are stored, and a timing controller 210. The timing controller 210 may receive the driving signal generation data and the EDID from the memory 220 and may transmit the EDID to the outside through the bi-directional channel 320. The driving signal generation data and the EDID may be transmitted from the memory 220 to the timing controller 210 via a single interface 270. The time in which the driving signal generation data is transmitted may not overlap the time in which the EDID is transmitted.

The host device 100 may receive EDID from the liquid crystal display 200. The host device 100 may transmit a signal to the liquid crystal display 200. The signal may be a video signal VIDEO and/or an audio signal AUDIO, that is, one of a video signal VIDEO and an audio signal (AUDIO), or a combination thereof.

The liquid crystal display 200 and the host device 100 may be connected to a transmission cable 300, and the liquid crystal display 200 may transmit the EDID through the transmission cable 300 in a DisplayPort interfacing format.

The transmission cable 300 may include a one-way channel 310 and a bi-directional channel 320. For example, when various signals are exchanged between the liquid crystal display 200 and the host device 100 through the transmission cable 300 in the DisplayPort interfacing format, the one-way channel 310 may be a main link, and the bi-directional channel 320 may be an auxiliary channel.

In recent years, a search has been under way for a new standard that can realize representation of more colors, a higher resolution, and a higher refresh rate while simplifying electrical connection. The Video Electronics Standards Association ("VESA") has put forth at least one such new interface standard. One of the new standards is a digital display interface called 'DisplayPort'.

DisplayPort is an interface intended to transmit a high-quality video signal and a high-quality audio signal using a single cable, and may offer up to 10.8 Gbps of bandwidth. Optionally, DisplayPort may protect content. A new interface such as DisplayPort may not require a scaler board. Accordingly, a new structure for storing EDID may be desired.

In other words, the liquid crystal display 200 may be connected to the host device 100 through the transmission cable 300 to receive and transmit various signals. The liquid crystal display 200 may receive the EDID from the memory 220 and transmit the EDID to the host device 100 through the bi-directional channel 320 of the transmission cable 300. That is, the liquid crystal display 200 may receive the driving signal generation data from the same memory 220 and transmit the driving signal generation data into the timing controller 210. The timing controller 210 may receive the driving signal generation data and the EDID from the memory 220 through a single interface 270. The driving signal generation data and the EDID may be transmitted at different times. The display system 10 may be a portable computer, e.g., a notebook computer. Further, the host device 100 may be a main board of a notebook computer, e.g., a mother board. However, this is only an example, but the present disclosure is not limited thereto.

Referring to FIG. 2, the liquid crystal display 201 may include a liquid crystal panel (not shown), a printed circuit board 260, and internal modules 510, 520, 530, and 540.

The liquid crystal panel may include a plurality of gate lines (not shown), a plurality of data lines (not shown), and a plurality of pixels (not shown) formed at intersections of the gate lines and the data lines. The liquid crystal panel may display an image in response to a video data voltage received from a data driver DIC and a gate driver (not shown).

The printed circuit board 260 may include driving integrated circuits (not shown), a first connector 230, a second connector 250, a memory 220, and a timing controller 210.

The data driver DIC may be mounted on the printed circuit board 260 and may generate various signals necessary to drive the liquid crystal display 201. For example, the gate driver (not shown) and the data driving integrated circuit DIC may be connected to the liquid crystal panel 100 to supply a gate signal and a video data voltage to display images. In FIG. 1, the data driver DIC is connected to the liquid crystal panel 100 in the form of an integrated circuit, and the gate driver is mounted on the liquid crystal panel 100. However, the forms of the data driver DIC and the gate driver are not limited thereto, and the data driver DIC and the gate driver may be alternatively mounted on or connected to the liquid crystal panel 100.

The printed circuit board 260 and the liquid crystal display 201, which may include first and second connectors 230 and 250, respectively, may receive and transmit various signals from/to external devices (not shown) through the first connector 230. Internal modules may receive and transmit various signals through the second connector 250.

The first connector 230 may transmit external signals including an image data signal VIDEO, an audio data signal AUDIO, and/or a video control signal CON_V or an audio control signal CON_A, to the printed circuit board 260. The first connector 230 may be connected to the transmission cable 240 transmitting the data signal and/or the control signal which are output from the external host device (100 of FIG. 1), e.g., a mother board of a notebook computer. Here, the video control signal CON_V may control luminance of an image, and the audio control signal CON_A may control audio volume. Alternatively, the control signal may be a monitor control command set ("MCCS") standardized by the Video Electronics Standards Association ("VESA").

The second connector 250 may be connected to the modules of the LCD 201 so that the modules can interface with one another through the second connector 250. The second connector 250 may allow various modules, for example, the timing controller 210, the inverter 510, the power supply module 520, the handling module 530, and the mode display module 540 to be connected to one another to be operable.

The memory 220 may store the driving signal generation data and the EDID. The EDID (Extended Display Identification Data) may include various kinds of data necessary for the display system to distinguish the liquid crystal display 200. For example, the EDID may include information about basic display parameters or characteristics, such as the full resolution of a monitor, horizontal and vertical frequencies, color information, a maximum image size, or a frequency range limit, and information about horizontal and vertical frequencies, a maker identifier, a model identifier, serial numbers, and so on.

The memory 220 may be a nonvolatile memory, for example an EEPROM (Electrically Erasable Programmable Read-Only Memory). The use of the EEPROM enables the information stored in the memory 220 to be stored in a stable manner for a prolonged period even without power supply and allows a user to repeatedly rewrite the stored information. In addition, in a system incorporating an EEPROM, the information in the stored in the EEPROM may be edited.

The timing controller 210 may receive the video signal VIDEO, the audio data signal AUDIO, and/or the control signals thereof, e.g., the video control signal CON_V and/or the audio control signal CON_A, through the first connector 230, and may output a video data voltage, an audio data voltage, and so on. When the timing controller 210 transmits a video data voltage to the data driver DIC and the gate driver, an image may be displayed on the liquid crystal panel 100 by the data driver DIC and the gate driver.

The timing controller 210 may interface with host device 10 through the transmission cable 240 including the bi-directional channel 320 and the one-way channel 310. In an embodiment, the timing controller 210 may transmit the EDID through the bi-directional channel 320 of the transmission cable 240. During this time, a HDCP (High-bandwidth Digital Content Protection) signal may also be transmitted to the host device 10. In addition, the timing controller 210 may receive control signals for controlling the output of the video signal VIDEO and/or the audio signal AUDIO from the host device 10 through the bi-directional channel 320 of the transmission cable 240. In an embodiment, the EDID, the HDCP signal, and the control signals for controlling the output of the video signal VIDEO and/or the audio signal AUDIO may belong to a monitor control command set ('MCCS') standardized by the Video Electronics Standards Association ('VESA'). The timing controller 210 may receive the video signal VIDEO and/or the audio signal AUDIO from the host device 10 through the one-way channel 310.

The timing controller 210 may be connected to the memory 220 to receive the driving signal generation data and the EDID. As described above, the driving signal generation data and the EDID may be transmitted from the memory 220 to the timing controller 210 through one single interface 270. The interface 270 between the memory 220 and the timing controller 210 may be, for example, an I2C (Inter-Integrated Circuit). The I2C may use an interface specification which may include only two lines of a clock signal line SCL and a data line SDA, for example as set forth in an interface specification developed by Phillips Corp. Data transmission of the driving signal generation data and the EDID between the timing controller 210 and the memory 220 will later be described with reference to FIGS. 4 and 5.

In an embodiment, the internal modules 510, 520, 530, and 540 may include the power supply module 520, the inverter 510, the handling module 530, and the mode display module 540.

The power supply module 520 may be connected to the second connector 250, may receive an external voltage, and may generate a power supply voltage Vcc and supply the generated power supply voltage Vcc to the printed circuit board 260 through the second connector 250. That is to say, the power supply module 520 may supply the power supply voltage Vcc to the memory 220, the timing controller 210, the data driver DIC and other ICs mounted on the printed circuit board 260 through the second connector 250.

In an embodiment, the power supply module 520 may be connected to the timing controller 210 through the second connector 250. For example, the timing controller 210 may supply a power saving mode signal PSM to the power supply module 520 through the second connector 250. A power saving mode signal PSM may be a signal for interrupting the power supply voltage Vcc from being supplied to the backlight unit 600 to reduce power consumption. When the power supply module 520 receives the power saving mode signal PSM, the power supply voltage Vcc may not be supplied to the backlight unit 600.

The inverter 510 may be connected to the second connector 250 to then be connected to the timing controller 210. For example, the inverter 510 may receive a backlight on/off signal ON/OFF and a dimming signal DIM from the timing controller 210 and may control the on/off and luminance of the backlight unit 600.

The handling module 530 may be connected to the second connector 250 to then be connected to the timing controller 210. For example, the handling module 530 may be provided in front of the liquid crystal display 201 in the form of a button, as shown in FIG. 2, and may generate a user command signal UCS in response to user's handling. The user command signal UCS may be supplied to the timing controller 210 through the second connector 250. The timing controller 210 may convert the user command signal UCS into, for example, the backlight on/off signal ON/OFF or the dimming signal DIM, to the inverter 510 through the second connector 250.

In an embodiment, the mode display module 540 may be connected to the second connector 250 to then be connected to the timing controller 210. For example, the power saving mode signal PSM output from the timing controller 210 may be received through the second connector 250 to indicate whether the liquid crystal display 201 is in a power saving mode.

In an embodiment, the liquid crystal display 201 may further include a transmission cable 240. The transmission cable 240 may be connected to the first connector 230, and may include a main link transmitting video signal and/or audio signal and an auxiliary channel transmitting control signals. The transmission cable 240 will be described in more detail with reference to FIG. 3.

In an embodiment, the transmission cable 240 may be connected to the first connector 230 to connect the liquid crystal display 201 and the host device 10. The transmission cable 240 may include an auxiliary channel AUX, which may be a bi-directional channel, and a main link, which may be a one-way channel, for example including ML_Lane0, ML_Lane1, ML_Lane2, and ML_Lane3, as shown in FIG. 3. For example, the transmission cable 240 may include a pair of auxiliary channels AUX, and four pairs of main links ML_Lane0, ML_Lane1, ML_Lane2 and ML_Lane3. In addition, the transmission cable 240 may further include a hot plug detect line HPDL, and an auxiliary power line AUX_PWR. Here, the transmission cable 240 may be a, for example, a cable used in the DisplayPort interfacing format.

The main links ML_Lane0, ML_Lane1, ML_Lane2, and ML_Lane3 may transmit the video signal VIDEO and/or the audio signal AUDIO received from the host device 100 to the liquid crystal display 201. The auxiliary channels AUX may transmit the EDID and/or the HDCP (High-bandwidth Digital Content Protection) signal received from the liquid crystal display 200 to the host device 10. In addition, the auxiliary channels AUX may transmit the control signals for controlling the output of the video signal VIDEO and/or the audio signal AUDIO received from the host device 10 to the liquid crystal display 201. The hot plug detect line HPDL and the auxiliary power line AUX_PWR may be channels for the liquid crystal display 201 to interface with the host device 10 in the DisplayPort interfacing format.

In summary, the timing controller 210 may receive the EDID from the memory 220 in which the driving signal generation data and the EDID are stored, and may transmit the EDID to the host device 100 through the auxiliary channels AUX. The EDID may be received at a time of transmitting the driving signal generation data, which may not overlap a time of transmitting the EDID. The host device 100 may transmit a video signal, an audio signal, and/or control signals to the liquid crystal display 200 through the main links ML_Lane0, ML_Lane1, ML_Lane2, and ML_Lane3.

Referring to FIGS. 4 and 5, the timing controller 210 may include a first communication module 211 and a second communication module 212. The first communication module 211 may receive the EDID and output the EDID to the outside. The second communication module 212 may receive driving signal generation data and may output a timing controller start signal TCON_START for starting the operation of the timing controller 210.

In an embodiment, the first communication module 211 and the second communication module 212 may be connected to the memory 220 through a clock signal line SCL and a data line SDA. In other words, the first communication module 211 and the second communication module 212 may receive the EDID or the driving signal generation data from the memory 220 and the I2C interface. That is to say, the first communication module 211 and the second communication module 212 may receive data through one single interface 270. The memory 220 may therefore be shared by the first communication module 211 and the second communication module 212.

However, the time in which the first communication module 211 gets access to the memory 220 to receive the EDID may be made to avoid overlap with the time in which the second communication module 212 gets access to the memory 220 to receive the driving signal generation data, thereby facilitating data transmission between the first communication module 211/the second communication module 212 and the memory 220.

For example, the timing controller 210 may receive the EDID after receiving the driving signal generation data. As shown in FIG. 5, when a power supply voltage is applied to the timing controller 210, that is, the timing controller 210 is turned ON, so that the transmission cable 240 is connected to the timing controller 210, the first communication module 211 may output a first ready signal READY_1. For example, the first ready signal READY_1 may change from a first level (e.g., a low level) to a second level (e.g., a high level) (t0).

In an embodiment, the second communication module 212 may get access to the memory 220 in response to the first ready signal READY_1 and may receive the driving signal generation data from the memory 220. When reception of the driving signal generation data is complete, the second communication module 212 may change the level of the first done signal DONE_1 from a first level to a second level to then deliver the first done signal DONE_1. In addition, the, second communication module 212 may deliver a second ready signal READY_2 (t1)

The first communication module 211 may get access to the memory 220 in response to the second ready signal READY_2 of the second communication module 212 and may receive the EDID from the memory 220. The first communication module 211 having the EDID may transmit the EDID to the outside through a bi-directional channel, for example, an auxiliary channel AUX.

As described above, in a case where the timing controller 210 and the host device 100 exchange various signals in a DisplayPort interfacing format, the first communication module 211 may function as a DisplayPort receiver. Although not shown, the host device 100 may include a DisplayPort transmitter corresponding to the DisplayPort receiver. The DisplayPort receiver and the DisplayPort transmitter may receive and transmit data through the main links ML_Lane0, ML_Lane1, ML_Lane2, and ML_Lane3, respectively. Each of the DisplayPort receiver and the DisplayPort transmitter may include a transceiver circuit for the auxiliary channel AUX, for example a bi-directional channel. In an embodiment, the auxiliary channel AUX may be a half-duplex communication channel.

If the transmission of the EDID from the memory 220 to the first communication module 211 is complete and an acknowledgement signal for the EDID transmission from the outside has been received, the first communication module 211 may receive a second done signal DONE_2. The second communication module 212 may output a timing controller start signal TCON_START in response to the second done signal DONE_2 which may make the timing controller 210 initiate generation of a driving signal (t3). In other words, the timing controller start signal TCON_START may be output in response to transitions of both the first done signal DONE_1 and the second done signal DONE_2 to the second level (e.g., high level).

In summary, when a power supply voltage is applied to the timing controller 210, so that the bi-directional channel 320 is connected to the timing controller 210, the first communication module 211 may output the first ready signal READY_1, the second communication module 212 may receive the driving signal generation data from the memory 220 in response to the first ready signal READY_1 to then deliver the first done signal DONE_1 and the second ready signal READY_2. The first communication module 211 may receive the EDID from the memory 220 in response to the second ready signal READY_2 to then output the EDID to the outside. Thereafter, the first communication module 211 may output the second done signal DONE_2. The second communication module 212 may then output the timing controller start signal TCON_START in response to the second done signal DONE_2 to make the timing controller 210 start a driving signal generation process.

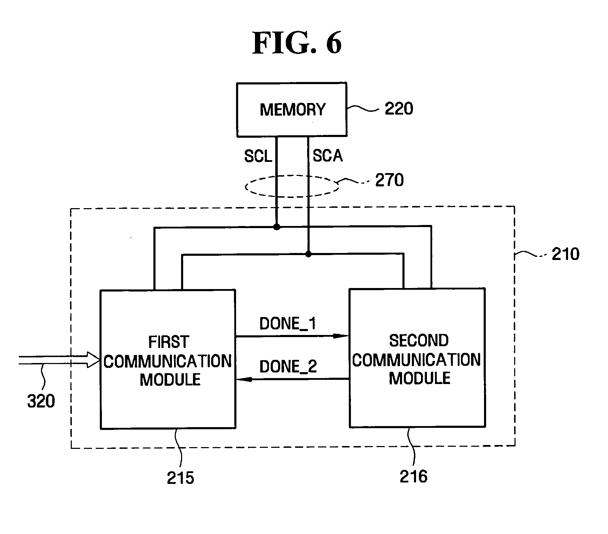

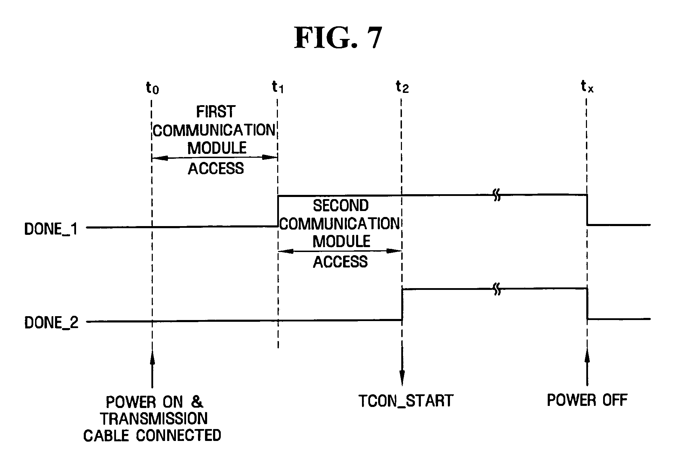

One or more embodiments of a liquid crystal display and a display system including the same is described below with reference to FIGS. 6 and 7. FIG. 6 is a block diagram showing an exemplary liquid crystal display and a display system including the same in accordance with an embodiment. FIG. 7 is a timing diagram illustrating operation of memories of first and second communication modules shown in FIG. 6 in accordance with an embodiment.

In an embodiment, a first communication module 215 and a second communication module 216 may deliver a first done signal and a second done signal, respectively. One or more embodiments are described below with regard to the differences between these embodiments and other embodiments previously described above. The description of elements having the same functions or substantially the same functions may be made briefly or omitted.

Referring to FIGS. 6 and 7, the first communication module 215 and the second communication module 216 may receive the driving signal generation data and the EDID through the memory 220 and one single interface 271. The first communication module 215 and the second communication module 216 may be connected to the memory 220 through the clock signal line SCL and the data line SDA, respectively. As described above, the memory 220 may be shared by the first communication module 215 and the second communication module 216, and the EDID and the driving signal generation data may be received through an I2C interface.

In addition, the first communication module 215 and the second communication module 216 may receive the EDID and the driving signal generation data, respectively, at different times. For example, after the first communication module 215 receives the EDID, the second communication module 216 may receive driving signal generation data from the memory 220.

As shown in FIG. 7, when a power supply voltage is applied to the timing controller 210, that is, the timing controller 210 is turned ON, so that the transmission cable 240 is connected to the timing controller 210, the first communication module 215 may get access to the memory 220 ID and may start receiving EDID from the memory 220 (t0). The first communication module 215 having the EDID may start transmitting the EDID to the host device 100 to the outside through, for example, a bi-directional channel 320. In an embodiment, the first communication module 215 may transmit the EDID to the host device 100 in a DisplayPort interfacing format.

If the first communication module 215 completes the transmission of the EDID, the first communication module 215 may output a first done signal DONE_1 in response to an externally applied acknowledge signal for the EDID transmission (t1). The second communication module 212 may gets access to the memory 220 in response to the first done signal DONE_1 to then receive driving signal generation data from the memory 220. If the receiving of the driving signal generation data is complete, the second communication module 216 may output a second done signal DONE_2 (t2). In an embodiment, the second communication module 216 may also output a timing controller start signal TCON_START which may make the timing controller 210 start generation of driving signals.

In summary, when a power supply voltage is applied to the timing controller 210, that is, the timing controller 210 is turned ON, so that a one-way channel 310 and a bi-directional channel 320 are connected to the timing controller 210, the first communication module 215 may receive EDID from the memory 220, may transmit the EDID to the outside, and may output a first done signal DONE_1. The second communication module 216 may receive driving signal generation data from the memory 220 in response to the first done signal DONE_1, may output second done signal DONE _2, and may output a timing controller start signal TCON_START in response to the first done signal DONE_1 and the second done signal DONE_2.

While the present invention has been particularly shown and described with reference to exemplary embodiments thereof, it will be understood by those of ordinary skill in the art that various changes in form and details may be made therein without departing from the spirit and scope of the present disclosure as defined by the following claims. It is therefore desired that the present embodiments be considered in all respects as illustrative and not restrictive, reference being made to the appended claims rather than the foregoing description to indicate the scope of the invention.

## Claims

1. A liquid crystal display comprising:
a bi-directional channel;
a memory in which driving signal generation data including information required to generate a plurality of driving signals and EDID (Extended Display Identification Data) are stored; and
a timing controller which receives the driving signal generation data and the EDID from the memory and transmits the EDID to the outside through the bi-directional channel, wherein the driving signal generation data and the EDID are transmitted from the memory to the timing controller via a single interface, and a first time period during which the driving signal generation data is transmitted does not overlap with a second time period during which the EDID is transmitted.

2. The liquid crystal display of claim 1, wherein the timing controller transmits the EDID in a DisplayPort interfacing format.

3. The liquid crystal display of claim 2, wherein the timing controller includes a first communication module receiving the EDID and outputting the EDID to the outside, and a second communication module receiving driving signal generation data and outputting a timing controller start signal for starting the operation of the timing controller.

4. The liquid crystal display of claim 3, wherein the timing controller receives the driving signal generation data and then receives the EDID.

5. The liquid crystal display of claim 4, wherein if a power supply voltage is applied to the timing controller so that the bi-directional channel is connected to the timing controller, the first communication module outputs a first ready signal, and the second communication module, in response to the first ready signal, receives from the memory the driving signal generation data and outputs a first done signal and a second ready signal, the first communication module receiving the EDID from the memory in response to the second ready signal.

6. The liquid crystal display of claim 5, wherein the first communication module outputs the EDID to the outside prior to outputting a second done signal, and the second communication module outputs the timing controller start signal in response to the second done signal.

7. The liquid crystal display of claim 3, wherein in the timing controller, after the first communication receives the EDID, the second communication module receives the driving signal generation data from the memory.

8. The liquid crystal display of claim 7, wherein if a power supply voltage is applied to the timing controller so that the one-way channel and the bi-directional channel are connected to the timing controller, the first communication module receives the EDID from the memory, transmits the EDID to the outside through the bi-directional channel, and outputs a first ready signal; and
wherein the second communication module, in response to the first ready signal, receives from the memory the driving signal generation data, outputs a second done signal, and outputs, in response to a first done signal and the second done signal, a timing controller start signal.

9. The liquid crystal display of claim 1, wherein the memory is an EEPROM (Electrically Erasable Programmable Read-Only Memory).

10. The liquid crystal display of claim 1, wherein the interface between the memory and the timing controller is an I2C (Inter-Integrated Circuit).

11. The liquid crystal display of claim 1, further comprising a one-way channel providing one of a video signal and an audio signal, or a combination thereof.
